# EUROPÄISCHE PATENTSCHRIFT

(11) **EP 0 951 046 B1**
(45) Veröffentlichungstag und Bekanntmachung des Hinweises auf die Patenterteilung: **27.10.2004**
(21) Anmeldenummer: 99890119.3
(22) Anmeldetag: 13.04.1999
(51) Int. Cl.: H01H 83/22, H02H 3/33

(54) **Fehlerstromschutzschalter**
Ground fault circuit breaker
Disjoncteur à courant de défaut

(30) Priorität: 17.04.1998 AT 65698
(43) Veröffentlichungstag der Anmeldung: 20.10.1999
(73) Patentinhaber: Felten & Guilleaume Austria AG, 3943 Schrems (AT)
(72) Erfinder: Sündermann, Siegfried, Ing., 3424 Zeiselmauer (AT)
(74) Vertreter: Gibler, Ferdinand, Dipl.Ing. Dr.

(56) Entgegenhaltungen:
- EP-A- 0 495 771
- EP-A- 0 570 603
- DE-A- 3 528 702
- FR-A- 2 549 287

## Beschreibung

Die Erfindung betrifft einen Fehlerstromschutzschalter mit einem Differenzstromwandler, der über eine Auswerte- und Auslöseelektronik mit einem Arbeitsstromauslöser verbunden ist, wobei der Arbeitsstromauslöser über ein Schaltschloß Hauptkontakte in zu überwachenden Leitern betätigt, wobei die Netzspannungsversorgung der Auswerte- und/oder Auslöseelektronik und/oder des Arbeitsstromauslösers elektrisch trennbar mit wenigstens einem Leiter verbunden ist.

Aus der EP 495 771 A2 ist ein gattungsgemäßer Schutzschalter bekannt, bei dem der Schloßauslöser des Schaltschlosses über einen Schalter elektrisch trennbar mit einem Außenleiter und dem Neutralleiter verbunden ist. Bei einer Unterbrechung des Außenleiters oder Neutralleiters ist daher die Funktion des FI-Schalters nicht mehr gegeben.

Aus der EP 0 570 603 A ist ein netzspannungsabhängiger Differenzstromschutzschalter bekannt, bei dem die Versorgung des Auslöserelais zwischen allen drei Außenleitern und dem Neutralleiter verwirklicht ist. Die Elektronik des aus der EP 0 570 603 A1 bekannten Differenzstromschutzschalters ist jedoch nicht in der Lage, den Arbeitsstrom, der beim Auslösen durch das Auslöserelais fließt, abzuschalten, wenn der Anschluß für den Arbeitsstrom zwischen Netzanschluß und den Hauptkontakten für die Netzleiter liegt. Aus diesem Grund sind bei dem bekannten Differenzstromschutzschalter die Netzseite und die Lastseite vorgegeben, damit die Hauptkontakte auch das Abschalten des Arbeitsstromes übernehmen.

Der Erfindung liegt die Aufgabe zugrunde, einen sehr betriebssicheren Fehlerstromschutzschalter der eingangs genannten Bauart so weiter zu entwickeln, daß die Lastseite und Netzseite beliebig gewählt werden können und der möglichst einfach aufgebaut ist und zusammengebaut werden kann.

Erfindungsgemäß wird diese Aufgabe gelöst mit einem Fehlerstromschutzschalter mit einem Differenzstromwandler, der über eine Auswerte- und Auslöseelektronik mit einem Arbeitsstromauslöser verbunden ist, wobei der Arbeitsstromauslöser über ein Schaltschloß Hauptkontakte in zu überwachenden Leitern betätigt, wobei die Netzspannungsversorgung der Auswerte- und/oder Auslöseelektronik und/oder des Arbeitsstromauslösers elektrisch trennbar mit wenigstens einem Leiter verbunden ist, der dadurch gekennzeichnet ist, daß die Auswerte- und/oder Auslöseelektronik und/oder der Arbeitsstromauslöser über Hilfskontaktapparate mit wenigstens zwei Leitern verbunden ist, und daß bewegliche Hilfskontakte der Hilfskontaktapparate an einer Schaltwalze des Hauptkontaktes und gehäusefeste Hilfskontakte der Hilfskontaktapparate im Gehäusedeckel des Fehlerstromschutzschalters angeordnet sind.

Bevorzugte und vorteilhafte Ausgestaltungen der Erfindung sind Gegenstand der Unteransprüche.

Bei der Erfindung ist vorgesehen, daß die Netzspannungsversorgung der Auswerte- und/oder Auslöseelektronik und/oder des Arbeitsstromauslösers elektrisch trennbar mit wenigstens zwei Leitern verbunden ist, was den Vorteil bietet, daß die Netzspannungsversorgung in jedem Fall zuverlässig getrennt wird, unabhängig davon, auf welcher Seite Netz und Last an den Fehlerstromschutzschalter angeschlossen sind. Durch die wenigstens zweipolige Netzspannungsversorgung ist die Funktionssicherheit erhöht, da diese auch dann noch funktioniert, wenn ein Pol der beiden ausfällt.

Da die beweglichen Hilfskontakte an einer Schaltwalze des Hauptkontaktes angeordnet sind, zeichnet sich der erfindungsgemäße Fehlerstromschutzschalter durch technische Einfachheit aus, da die Hilfskontaktapparate in diesem Fall gleichzeitig mit den Hauptkontakten an der Schaltwalze betätigt werden.

In Weiterbildung der Erfindung kann die Spannungsversorgung der Auswerte- und/oder Auslöseelektronik und/oder des Arbeitsstromauslösers über einen Gleichrichter erfolgen und der Gleichrichter dreipolig oder allpolig an das Netz angeschlossen sein.

Dabei wird dank der mehrpoligen Versorgung des Arbeitsstromauslösers, die bevorzugt vollweggleichgerichtet ist, die Betriebssicherheit des Fehlerstromschutzschalter erhöht, da er - z.B. bei allpoliger Versorgung - auch bei Ausfall von zwei Polen noch funktionsfähig ist, da der Arbeitsstromauslöser auch bei Ausfall beispielsweise von zwei Außenleitern oder einem Außenleiter und dem Neutralleiter im Auslösefall immer noch mit Netzspannung versorgt wird.

Bei entsprechender Dimensionierung der Teile des erfindungsgemäßen Fehlerstromschutzschalters ist die Funktion ab 0,4 x Uₙ bei zweipoliger Versorgung und bis 1,1 x Uₙ bei allpoliger Versorgung sichergestellt (Nennspannung 230/400 V).

Um den Aufbau und die Montage des erfindungsgemäßen Fehlerstromschutzschalters sehr einfach zu gestalten, kann dieser dadurch weitergebildet sein, daß die gehäusefesten Hilfskontakte, der Gleichrichter, gegebenenfalls der Überspannungsschutz, von den Hilfskontakten zum Gleichrichter führende Netzleitungen sowie gleichspannungsseitig nach dem Gleichrichter angeordnete Kontakte im Gehäusedeckel des Fehlerstromschutzschalters angeordnet sind, sowie, daß den Kontakten im Gehäusedeckel Kontakte in der Gehäusewanne zugeordnet sind, die mit der Auswerte- und/oder Auslöseelektronik und/oder dem Arbeitsstromauslöser elektrisch verbunden sind.

Dies erlaubt es, die gesamte Spannungsversorgung der Auswerte- und/oder Auslöseelektronik und/oder des Arbeitsstromauslösers am Gehäusedeckel des Fehlerstromschutzschalters vorzumontieren, wobei die zugehörigen Kontakte bzw. Verbindungen bei der Montage des Gehäusedeckels automatisch hergestellt werden, was sehr einfach ist.

Weitere Einzelheiten, Merkmale und Vorteile des erfindungsgemäßen Fehlerstromschutzschalters ergeben sich aus der nachstehenden Beschreibung der in den Zeichnungen dargestellten Ausführungsbeispiele der Erfindung. Es zeigt: Fig. 1 beispielhaft ein Schaltbild eines erfindungsgemäßen Fehlerstromschutzschalters mit allpoliger Versorgung, Fig. 2 die wesentlichen Teile einer praktischen Ausführungsform eines Fehlerstromschutzschalters gemäß der Erfindung, Fig. 3 die zeitliche Abfolge der Kontaktberührungen in einem erfindungsgemäßen Fehlerstromschutzschalter, Fig. 4 ein Schaltbild eines erfindungsgemäßen Fehlerstromschutzschalters mit zweipoliger Versorgung und Fig. 5 ein Schaltbild eines erfindungsgemäßen Fehlerstromschutzschalters mit dreipoliger Versorgung.

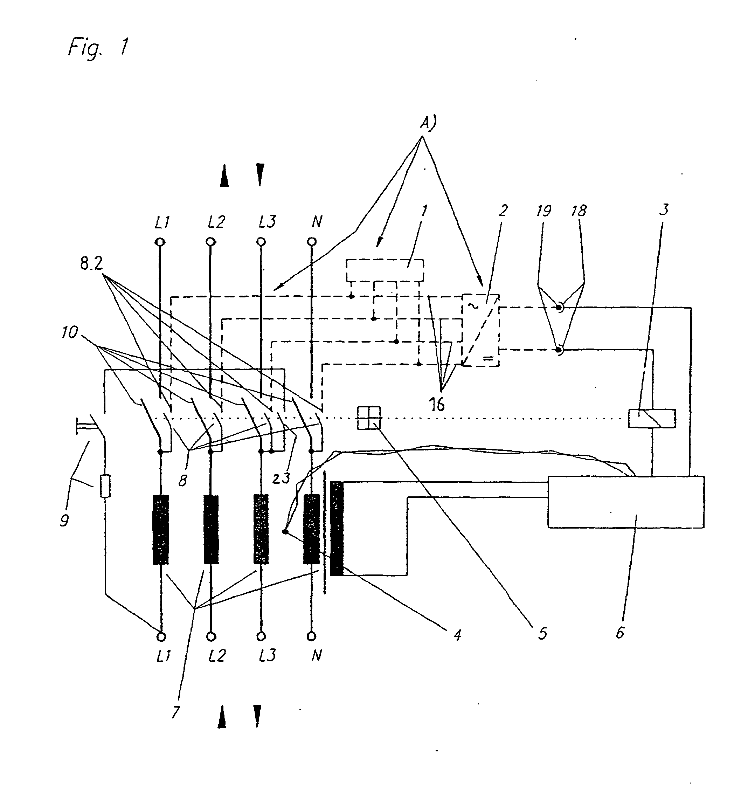

Der erfindungsgemäße Fehlerstromschutzschalter, dessen Schaltbild allgemein in Fig. 1 gezeigt ist, wird wie üblich über Klemmen an die Netzleiter (Außenleiter L1, L2 und L3, Neutralleiter N) angeschlossen. Die Sekundärwicklung eines Differenzstromwandlers 7, dessen Primärwicklungen an die Netzleiter angeschlossen sind, ist mit einer Auswerte- und/oder Auslöseelektronik 6 verbunden. Sowohl die Auswerte- als auch die Auslöseelektronik können netzspannungsunabhängig oder netzspannungsabhängig arbeiten. Diese Auswerte- und/oder Auslöseelektronik 6 kann, wie dies aus der EP 0 495 771 A bekannt ist, eine Energiespeicherschaltung und ein Wandlerrelais (monostabiles oder bistabiles Relais) oder eine Thyristorschaltstrecke besitzen.

Überschreitet der Fehlerstrom in der Primärwicklung des Differenzstromwandlers 7 einen vorbestimmten Wert, dann spricht die Auswerte- und/oder Auslöseelektronik 6 an und der Stromkreis, in dem sich ein Arbeitsstromauslöser 3 befindet, betätigt netzspannungsabhängig ein Schaltschloß 5, das die Hauptkontakte 10 öffnet. Gleichzeitig wird der Kontakt 23 der Prüfeinrichtung 9 geöffnet.

Wie im Schaltbild von Fig. 1 gezeigt, wird der Arbeitsstromauslöser 3 über einen Gleichrichter 2, der vorzugsweise ein Vollweggleichrichter ist, allpolig mit Netzspannung versorgt. Dies erfolgt in der Weise, daß jedem Hauptkontakt 10 ein Hilfskontaktapparat 8 zugeordnet ist. Die Hilfskontaktapparate 8 werden gemeinsam mit den Hauptkontakten 10 im Auslösefall vom Schaltschloß 5 betätigt. Dies bedeutet, daß die Hilfskontaktapparate 8 offen sind, wenn auch die Hauptkontakte 10 offen sind und daß die Hilfskontaktapparate 8 geschlossen sind, wenn auch die Hauptkontakte 10 geschlossen sind. Es ist auch möglich, nur die Außenleiter L1, L2 und L3 über Hilfskontaktapparate 8, den Neutralleiter N aber fest oder gar nicht zur Netzspannungsversorgung der Auswerte- und/oder Auslöseelektronik 6 und/oder des Arbeitsstromauslösers 3 anzuschließen.

In die von den festen Hilfskontakten 8.2 der Hilfskontaktapparate 8 zum Gleichrichter 2 führenden Leitungen 16 ist ein Überspannungsschutz 1 integriert, der beispielsweise ein Varistor und/oder eine Funkenstrecke und/oder ein Vorwiderstand und/oder eine Zenerdiode und/oder ein Transsorb- und/oder ein Transguard-Schutzelement ist. Durch diesen Überspannungsschutz 1 wird erreicht, daß die nachfolgende Elektronik (Gleichrichter 2, Auswerte- und/oder Auslöseelektronik 6) im Falle von Netzüberspannungen (in Folge von Blitz, Schaltvorgängen od. dgl.) geschützt ist.

Es ist erkennbar, daß mit einem Fehlerstromschutzschalter mit der in Fig. 1 gezeigten Schaltung durch das allpolige Schalten der Versorgung des Arbeitsstromauslösers 3 und durch die nachfolgende Vollweggleichrichtung die Funktion des Fehlerstromschutzschalters auch dann sichergestellt ist, wenn zwei Leiter ausfallen. Beispielsweise ist die Funktion des Fehlerstromschutzschalters auch dann sichergestellt, wenn zwei Außenleiter oder ein Außenleiter und der Neutralleiter der Versorgung ausfallen.

Als Überlastschutz kann dem Summenstromwandler ein Temperaturfühler 4 zugeordnet sein, der bei Erreichen einer bestimmten, von ihm im Summenstromwandler 7 erfaßten Temperatur bewirkt, daß der FI-Schalter abschaltet, bevor es durch Überlast zu einer übermäßigen Belastung und/oder Beschädigung des FI-Schalters durch Erwärmung kommt. Dies kann z.B. dadurch erfolgen, daß über den Thermoschutz der Energiespeicher direkt geladen wird.

Beim erfindungsgemäßen Fehlerstromschutzschalter wird durch die in ihn integrierten allpoligen Hilfsschalter 8 der Arbeitsstrom, der den Arbeitsstromauslöser 3 betätigt, nach dem Auslösen abgeschaltet.

In dem Schaltbild von Fig. 1 ist auch angedeutet, daß bestimmte, u.zw. die in Fig. 1 strichliert dargestellten Bauteile beispielsweise in den Gehäusedeckel eines Fehlerstromschutzschalters integriert sein können. So können beispielsweise die festen Hilfskontakte 8.2 der Hilfskontaktapparate 8 im Schalterdeckel montiert sein, was hinsichtlich Material und Arbeitsaufwand eine einfache Lösung darstellt. Auch der Gleichrichter 2 und der Überspannungsschutz 1 können in den Schalterdeckel integriert und an diesem vormontiert sein.

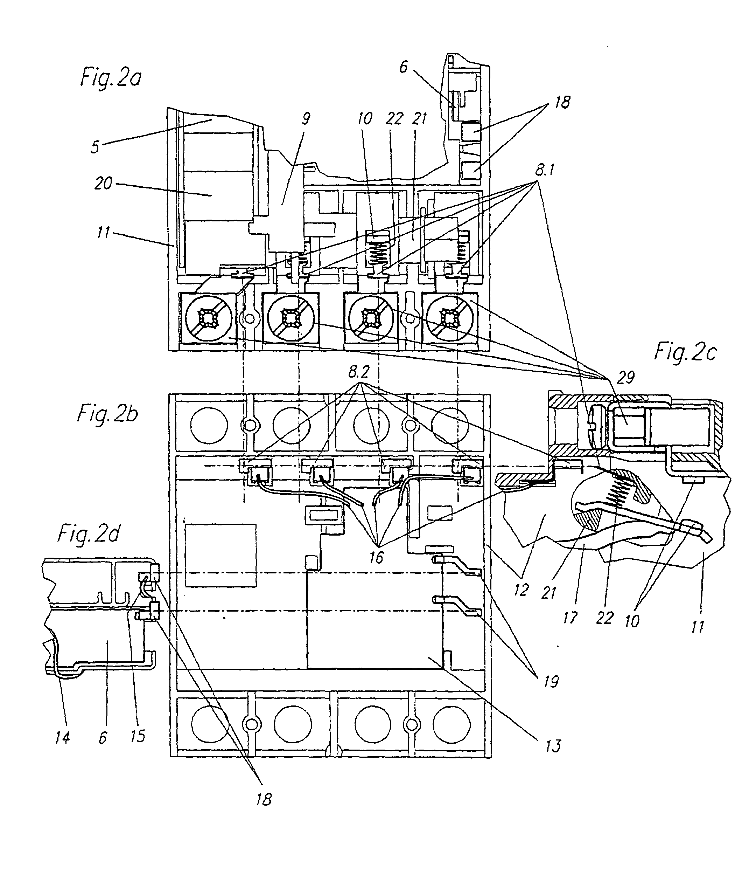

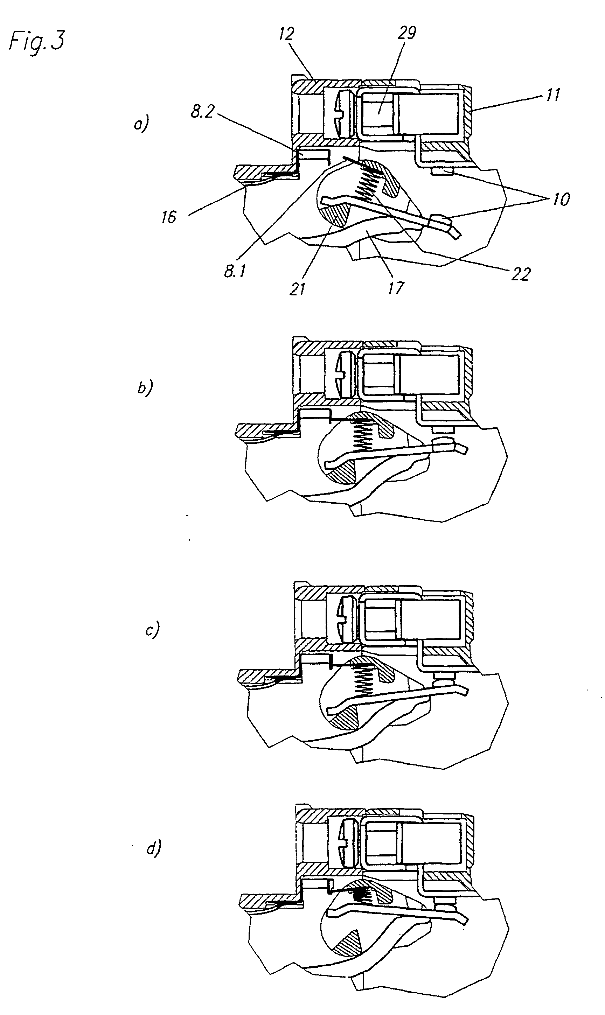

Dabei kann auch die Kontaktierung des Stromkreises für den Arbeitsstromauslöser 3 gleichspannungsseitig im Gehäusedeckel vorgesehen sein, so daß bei Montage des Gehäusedeckels die Kontaktierung der Gleichspannungsseite auf den Arbeitsstromauslöser 3 und die Auswerte- und/oder Auslöseelektronik 6 (Auslöseprint) mit der Montage des Schalterdeckels erfolgt. Dies ist ein einfacher Arbeitsgang. Nachstehend wird unter Bezugnahme auf die Figuren 2 und 3 eine praktische Ausführung eines erfindungsgemäßen Fehlerstromschutzschalters beispielhaft erläutert. Der grundsätzliche Aufbau des Fehlerstromschutzschalters kann dabei beispielsweise dem Aufbau des Fehlerstromschutzschalters gemäß der EP 0 495 771 A2 entsprechen.

In Fig. 2 ist der Fehlerstromschutzschalter in der AUS-Stellung dargestellt.

Fig. 2a zeigt teilweise die Gehäusewanne 11, die den unteren, z.B. auf einer Montageschiene festzulegenden Teil des Gehäuses des Fehlerstromschutzschalters bildet. In der Gehäusewanne 11 sind insgesamt acht Klemmen 29 (nur vier sind sichtbar) untergebracht. Weiters ist in der Gehäusewanne 11 drehbar eine Schaltwalze 21 (vgl. Fig. 2c) gelagert, welche die beweglichen Schaltbrücken der Hauptkontakte 10 trägt. An den beweglichen Schaltbrücken der Hauptkontakte 10 sind die Hauptleitungen 17 in Form von Leiterseilen befestigt.

In der Gehäusewanne 11 sind weiters das Schaltschloß 5 mit Betätigungsknebel 20 für die Handschaltung, die Prüfeinrichtung 9, die Auswerte- und/oder Auslöseelektronik 6 sowie der Summenstromwandler 7 (Fig. 1) untergebracht.

Wie in Fig. 2c gezeigt, werden die an der Schaltwalze 21 angeordneten beweglichen Schaltbrücken der Hauptkontakte 10 von Federn 22 belastet, so daß sie in der EIN-Stellung (siehe Fig. 3d) gegenüber der Schaltwalze 21 unter Zusammendrücken der Feder 22 verschwenken können.

Die Federn 22 dienen gleichzeitig dazu, die beweglichen Hilfskontakte 8.1 der Hilfskontaktapparate 8 an der Schaltwalze 21 festzulegen.

Wie in Fig. 2b gezeigt, sind im Gehäusedeckel 12 die den beweglichen Hilfskontakten 8.1 zugeordneten, gehäusefesten Hilfskontakte 8.2 der Hilfskontaktapparate 8 montiert. Von den festen Hilfskontakten 8.2 gehen die Netzleitungen 16 aus, die zu dem ebenfalls im Gehäusedekkel 12 befestigten Gleichrichter 2 und Überspannungsschutz 1 führen. Dabei können der Überspannungsschutz 1 und der Gleichrichter 2 als Print 13 ausgebildet und im Gehäusedeckel 12 festgelegt sein. Vom Print 13 ragen seitlich zwei Leiterfahnen weg, welche die gehäusedeckelfesten Kontakte 19 für die gleichspannungsseitige Kontaktierung (siehe Bezugszeichen 18 und 19 in Fig. 1) bilden. Diesen Kontakten 19 sind (siehe Fig. 2a und 2d) Kontakte 18 an der Auswerte- und/oder Auslöseelektronik 6 sowie Arbeitsstromauslöser 3 zugeordnet, so daß die Kontakte 19 und 18 einander bei auf der Gehäusewanne 11 aufgesetztem Gehäusedeckel 12 berühren und so die elektrische Verbindung für die Versorgung des Arbeitsstromauslösers 3 mit Netzspannung (im Auslösefall) gewährleistet ist. Die zum Arbeitsstromauslöser 3 führenden Leitungen sind in Fig. 2d mit 14 und 15 bezeichnet.

Der in Fig. 3 dargestellten zeitlichen Abfolge der Kontaktbewegungen ist folgendes zu entnehmen: In der AUS-Stellung des erfindungsgemäßen Fehlerstromschutzschalters sind sowohl die Hauptkontakte 10, als auch die Hilfskontakte 8.1, 8.2 geöffnet. Wird die Schaltwalze 21 mit Hilfe des Schaltknebels 20 im Sinne einer Einschaltbewegung gedreht, so berühren zunächst die beweglichen Hilfskontakte 8.1 die ortsfesten Hilfskontakte 8.2 der Hilfskontaktapparate 8, wie dies Fig. 3b zeigt.

Beim fortgesetzten Verdrehen der Schaltwalze 21 berühren einander die Kontakte der Hauptkontakte 10 (Fig. 3c).

Durch Weiterdrehen der Schaltwalze 21 wird schließlich die EIN-Stellung gemäß Fig. 3d erreicht, in der die Schaltwalze 21 durch das Schaltschloß arretiert wird. In dieser EIN-Stellung sind sowohl die beweglichen Schaltbrücken der Hauptkontakte 10 als auch die beweglichen Hilfskontakte 8.1 der Hilfskontaktapparate 8 gegenüber der Schaltwalze 21 verschwenkt, wobei die Federn 22 zusammengedrückt sind.

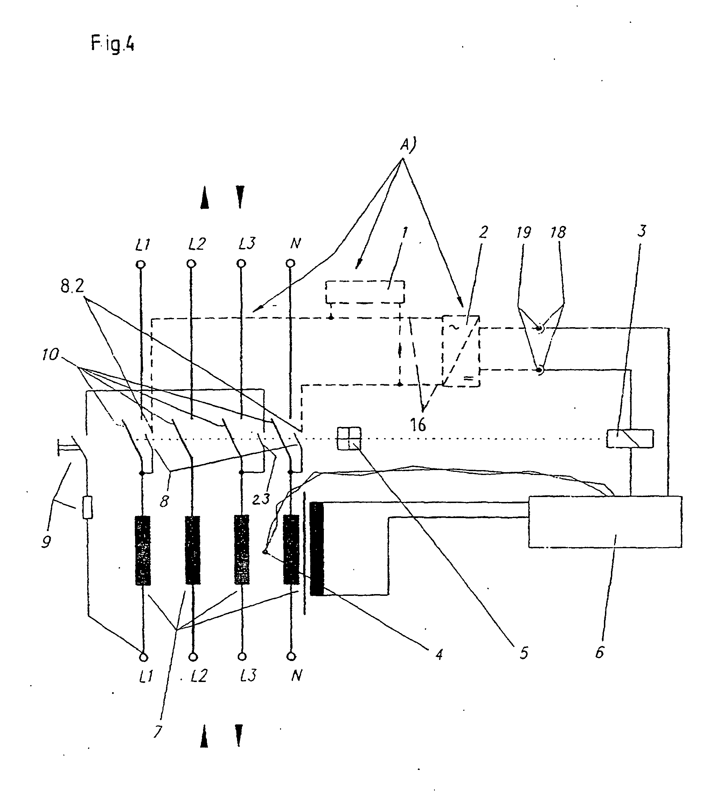

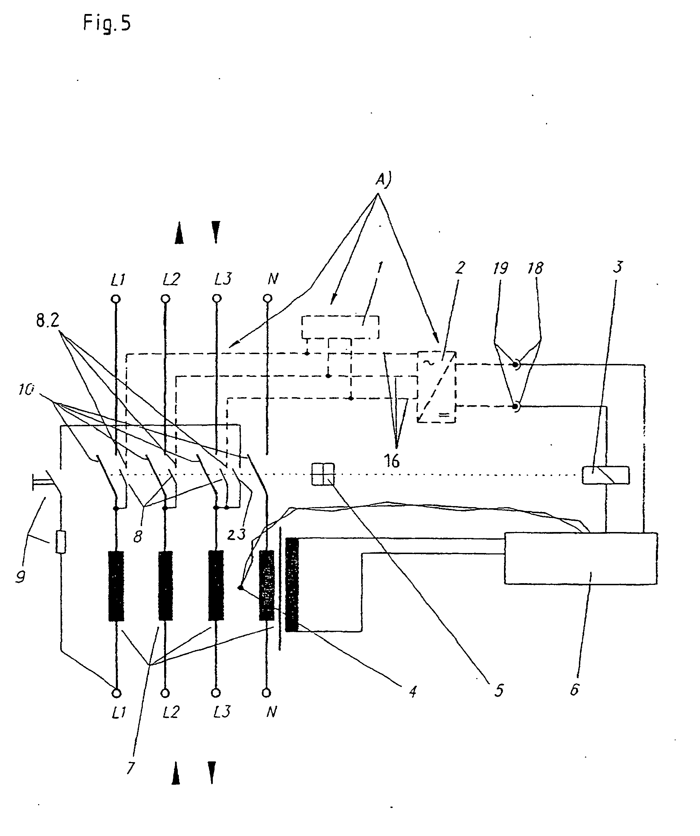

In Fig. 4 ist ein Fig. 1 entsprechender Fehlerstromschutzschalter dargestellt, wobei die Auswerte- und/oder Auslöseelektronik 6 und der Arbeitsstromauslöser 3 zweipolig (L1, N) über den Gleichrichter 2 mit Netzspannung versorgt werden und in Fig. 5 eine dreipolige (L1, L2, L3) Netzspannungsversorgung der Auswerte- und/oder Auslöseelektronik 6 und des Arbeitsstromauslösers 3.

## Patentansprüche

1. Fehlerstromschutzschalter mit einem Differenzstromwandler (7), der über eine Auswerte- und Auslöseelektronik (6) mit einem Arbeitsstromauslöser (3) verbunden ist, wobei der Arbeitsstromauslöser (3) über ein Schaltschloß (5) Hauptkontakte (10) in zu überwachenden Leitern (L1, L2, L3, N) betätigt, wobei die Netzspannungsversorgung der Auswerte- und/oder Auslöseelektronik (6) und/oder des Arbeitsstromauslösers (3) elektrisch trennbar mit wenigstens einem Leiter (L1, L2, L3, N) verbunden ist, **dadurch gekennzeichnet, daß** die Auswerte- und/oder Auslöseelektronik (6) und/oder der Arbeitsstromauslöser (3) über Hilfskontaktapparate (8) mit wenigstens zwei Leitern (L1, L2, L3, N) verbunden ist, und daß bewegliche Hilfskontakte (8.1) der Hilfskontaktapparate (8) an einer Schaltwalze (21) des Hauptkontaktes (10) und gehäusefeste Hilfskontakte (8.2) der Hilfskontaktapparate (8) im Gehäusedeckel (12) des Fehlerstromschutzschalters angeordnet sind.

2. Fehlerstromschutzschalter nach Anspruch 1, **dadurch gekennzeichnet, daß** die Spannungsversorgung der Auswerte- und/oder Auslöseelektronik (6) und/oder des Arbeitsstromauslösers (3) über einen Gleichrichter (2) erfolgt.

3. Fehlerstromschutzschalter nach Anspruch 2, **dadurch gekennzeichnet, daß** der Gleichrichter (2) dreipolig (L1, L2, L3) an das Netz angeschlossen ist.

4. Fehlerstromschutzschalter nach Anspruch 2 oder 3, **dadurch gekennzeichnet, daß** der Gleichrichter (2) allpolig (L1, L2, L3, N) an das Netz angeschlossen ist.

5. Fehlerstromschutzschalter nach einem der Ansprüche 2 bis 4, **dadurch gekennzeichnet, daß** dem Gleichrichter (2) ein Überspannungsschutz (1) vorgeschaltet ist.

6. Fehlerstromschutzschalter nach einem der Ansprüche 2 bis 5, **dadurch gekennzeichnet, daß** die gehäusefesten Hilfskontakte (8.2), der Gleichrichter (2), gegebenenfalls der Überspannungsschutz (1), von den Hilfskontakten (8.2) zum Gleichrichter (2) führende Netzleitungen (16) sowie gleichspannungsseitig nach dem Gleichrichter (2) angeordnete Kontakte (19) im Gehäusedeckel (12) des Fehlerstromschutzschalters angeordnet sind.

7. Fehlerstromschutzschalter nach Anspruch 6, **dadurch gekennzeichnet, daß** den Kontakten (19) im Gehäusedeckel (12) Kontakte (18) in der Gehäusewanne (11) zugeordnet sind, die mit der Auswerte- und/oder Auslöseelektronik (6) und/oder dem Arbeitsstromauslöser (3) elektrisch verbunden sind.

## Claims

1. A ground-fault circuit breaker with a residual-current converter (7) which is connected to an open-circuit shunt release (3) via an electronic evaluation and tripping system (6), with the open-circuit shunt release (3) actuating the main contacts (10) in the conductors (L1, L2, L3, N) to be monitored via latching mechanism (5), with the mains voltage supply of the electronic evaluation and tripping system (6) and/or the open-circuit shunt release (3) being connected in an electrically separatable way to at least one conductor (L1, L2, L3, N), **characterized in that** the electronic evaluation and/or tripping system (6) and/or the open-circuit shunt release (3) is connected via auxiliary contact apparatuses (8) with at least two conductors (L1, L2, L3, N) and that movable auxiliary contacts (8.1) of the auxiliary contact apparatuses (8) are arranged on a drum controller (21) of the main contact (10) and auxiliary contacts (8.2) of the auxiliary contact apparatuses (8), which auxiliary contacts are rigidly connected to the housing, are arranged in the housing cover (12) of the ground-fault circuit breaker.

2. A ground-fault circuit breaker as claimed in claim 1, **characterized in that** the voltage supply of the electronic evaluation and/or tripping system (6) and/or the open-circuit shunt release (3) is provided through a rectifier (2).

3. A ground-fault circuit breaker as claimed in claim 2, **characterized in that** the rectifier (2) is connected to the mains with three poles (L1, L2, L3).

4. A ground-fault circuit breaker as claimed in claim 2 or 3, **characterized in that** the rectifier (2) is connected to the mains with all poles (L1, L2, L3, N).

5. A ground-fault circuit breaker as claimed in one of the claims 2 to 4, **characterized in that** an overvoltage protection (1) is connected in incoming circuit with the rectifier (2).

6. A ground-fault circuit breaker as claimed in one of the claims 2 to 5, **characterized in that** the auxiliary contacts (8.2) fixed on the housing, the rectifier (2), optionally the overvoltage protection (1), mains lines (16) leading from the auxiliary contacts (8.2) to the rectifier (2) as well as contacts (19) arranged on the DC voltage side after the rectifier (2) are arranged in the housing cover (12) of the ground-fault circuit breaker.

7. A ground-fault circuit breaker as claimed in claim 6, **characterized in that** contacts (18) in the housing trough (11) are associated with the contacts (19) in the housing cover (12), which contacts in the housing trough are electrically connected with the electronic evaluation and/or tripping system (6) and/or the open-circuit shunt release (3).

## Revendications

1. Disjoncteur de protection à courant de défaut avec un convertisseur de courant différentiel (7) relié par une électronique d'évaluation et de déclenchement (6) à un déclencheur à courant de travail (3), lequel déclencheur à courant de travail (3) actionne par l'intermédiaire d'un verrouillage de connexion (5) des contacts principaux (10) dans les conducteurs à surveiller (L1, L2, L3, N), l'alimentation en tension du réseau de l'électronique d'interprétation et/ou de déclenchement (6) et/ou du déclencheur à courant de travail (3) étant connectée d'une manière pouvant être coupée électriquement avec au moins un conducteur (L1, L2, L3, N), **caractérisé en ce que** l'électronique d'interprétation et/ou de déclenchement (6) et/ou le déclencheur à courant de travail (3) sont reliés par des appareils de contact auxiliaires (8) avec au moins deux conducteurs (L1, L2, L3, N) et **en ce que** des contacts auxiliaires mobiles (8.1) des appareils de contact auxiliaires (8) sont disposés sur un rouleau de commutation (21) du contact principal (10) et des contacts auxiliaires fixés au boîtier (8.2) des appareils de contact auxiliaires (8) sont disposés dans le couvercle de boîtier (12) du disjoncteur de protection à courant de défaut.

2. Disjoncteur de protection à courant de défaut selon la revendication 1, **caractérisé en ce que** l'alimentation électrique de l'électronique d'interprétation et/ou de déclenchement (6) et/ou du déclencheur à courant de travail (3) est réalisée par un redresseur (2).

3. Disjoncteur de protection à courant de défaut selon la revendication 2, **caractérisé en ce que** le redresseur (2) est connecté au réseau sur trois pôles (L1, L2, L3).

4. Disjoncteur de protection à courant de défaut selon la revendication 2 ou 3, **caractérisé en ce que** le redresseur (2) est connecté au réseau sur tous les pôles (L1, L2, L3, N).

5. Disjoncteur de protection à courant de défaut selon l'une quelconque des revendications 2 à 4, **caractérisé en ce qu'**une protection contre les surtensions (1) est montée en amont du redresseur (2).

6. Disjoncteur de protection à courant de défaut selon l'une quelconque des revendications 2 à 5, **caractérisé en ce que** les contacts auxiliaires fixés aux boîtier (8.2), le redresseur ( 2), éventuellement la protection contre les surtensions (1), des lignes de réseau (16) allant des contacts auxiliaires (8.2) au redresseur (2) ainsi que des contacts (19) disposés après le redresseur (2) du côté du courant continu sont disposés dans le couvercle d'appareil (12) du disjoncteur de protection à courant de défaut.

7. Disjoncteur de protection à courant de défaut selon la revendication 6, **caractérisé en ce que** les contacts (19) sont associés dans le couvercle de boîtier (12) à des contacts (18) dans le corps de boîtier (11) qui sont reliés électriquement avec l'électronique d'évaluation et/ou de déclenchement (6) et/ou avec le déclencheur à courant de travail (3).
